# EUROPÄISCHE PATENTSCHRIFT

(11) **EP 0 741 628 B1**
(45) Veröffentlichungstag und Bekanntmachung des Hinweises auf die Patenterteilung: **15.05.2002**
(21) Anmeldenummer: 95906882.6
(22) Anmeldetag: 24.01.1995
(51) Int. Cl.: B23K 33/00, G21F 5/10

(54) **VERFAHREN ZUR HERSTELLUNG EINER SCHWEISSVERBINDUNG UND NACH DIESEM VERFAHREN HERGESTELLTER TRANSPORT UND LAGERBEHÄLTER FÜR ABGEBRANNTE KERNBRENNSTOFFKASSETEN**
METHOD OF CREATING A WELDED JOINT AND A TRANSPORT AND STORAGE CONTAINER FOR SPENT NUCLEAR FUEL HOLDERS PRODUCED BY THE SAID METHOD
PROCEDE DE REALISATION D'UN ASSEMBLAGE SOUDE ET RECIPIENTS DE TRANSPORT ET DE STOCKAGE DE CARTOUCHES DE COMBUSTIBLE NUCLEAIRE EPUISE REALISES SELON LEDIT PROCEDE

(30) Priorität: 27.01.1994 DE 4402282
(43) Veröffentlichungstag der Anmeldung: 13.11.1996
(73) Patentinhaber: GNB Gesellschaft für Nuklear-Behälter mbH, 45127 Essen (DE); SOCIETE POUR LES TRANSPORTS DE L'INDUSTRIE NUCLEAIRE TRANSNUCLEAIRE, 78182 Montigny le Bretonneux (FR)
(72) Erfinder: CANZLER, Hans-Jürgen, D-09113 Chemnitz (DE); HAMMER, Heinz, D-09130 Chemnitz (DE); LAUG, Reiner, D-63546 Hammersbach (DE); BOTZEM, Werner, D-63755 Alzenau-Hörstein (DE); Lemogne, André, 95120 Ermont (FR); Buonomo, Marc, 67160 Wissembourg (FR)
(74) Vertreter: Poulin, Gérard
(86) Internationale Anmeldenummer: DE9500090
(87) Internationale Veröffentlichungsnummer: WO9520459

(56) Entgegenhaltungen:
- US-A- 3 930 166
- US-A- 5 026 098

## Beschreibung

Die Erfindung betrifft ein Verfahren zur Herstellung eines doppelwandigen Transport- und/oder Lagerbehälters, insbesondere für abgebrannte Kernbrennstoffkassetten, wobei auf dem Umfang eines hohlen zylindrischen Grundkörpers Rippen befestigt werden, die Zwischenwände zwischen benachbarten Rippen im Kopfbereich der Rippen mit Hilfe von miteinander verschweißten Elementen überbrückt werden und die Elemente jeweils miteinander und mit dem Kopf einer dort befindlichen Rippe verbunden werden.

Die Erfindung bezieht sich auch auf einen nach diesem Verfahren hergestellten Transport- und/oder Lagerbehälter, vorzugsweise für abgebrannte Kernbrennstoffkassetten.

In der Praxis ist es allgemein üblich, einen Mehrfachstoß von Teilen so herzustellen, daß die an der Schweißverbindung beteiligten Teile durch mehrere Schweißnähte, die vorzugsweise als Kehlnaht ausgebildet sind, einzeln nach- und miteinander verbunden werden (vergl. Dubbel, Taschenbuch für Maschinenbau, 18. Auflage, Seite G 13).

Ein solches Verfahren erfordert, daß der Mehrfachstoß im Bereich aller seiner Kehlen für den Schweißer oder eine automatische Schweißvorrichtung zugängig sein muß. Das ist nachteilig und beschränkt den Umfang der Einsatzgebiete für derartige Schweißverbindungen.

Dieses Verfahren hat auch den Nachteil, daß Teile aus unterschiedlichen Werkstoffen nicht oder nur mit erheblichen Einschränkungen hinsichtlich der Qualität miteinander verschweißt werden können.

Eine optische Kontrolle oder eine Prüfung der Qualität der Schweißnaht mit Hilfe entsprechender Geräte ist oft nicht möglich. Der Einsatz solcher Schweißverbindungen ist an Objekten, an die hohe Sicherheitsanforderungen gestellt werden müssen, z.B. für Transport- und/oder Lagerbehälter für abgebrannte Kernbrennstoffkassetten, nicht möglich.

Durch das US-Patent 5026098 ist ein Verfahren zur koaxialen Verbindung von zwei Komponenten vorgeschlagen worden. Beide Komponente sind, vorzugsweise, rotationssymmetrische Teile. Sie haben je einen Bund. Eine zweiteilige, ringförmige Hülse, von der jedes der Teile entweder mit einem der Bunde verbunden ist oder diesen formschlüssig über eine konische Fläche hintergreift, wird mit einer Oberflächennaht zu einer geschlossenen Hülse verschweißt.

Durch die Schrumpfkräfte dieser Schweißnaht werden die Bunde und damit die Komponenten kraftschlüssig gegeneinander gepreßt. Bei einem späteren Trennvorgang der Komponenten braucht nur die Hülse getrennt werden, die Paßflächen der Komponenten bleiben für einen erneuten Verbindungsvorgang erhalten.

Diese Lösung ist auf Schweißverbindungen beschränkt, mit denen, im Sinne einer Kupplung, stabförmige Teile gleicher Grundcharakteristik und Größe, vorzugsweise runde Teile stirnseitig dicht miteinander verbunden werden.

Diese Schweißverbindung und das dargestellte Verfahren ist nicht geeignet, Teile miteinander zu verbinden, die nur einen Bruchteil der Oberfläche eines großvolumigen Körpers bedecken und keine Stütze auf der gegenüberliegenden Seite des Körpers haben.

Solche Bedingungen sind u.a. bei der Herstellung von doppelwandigen Transport- und/oder Lagerbehältern gegeben. Solche Transport und/oder Lagerbehälter werden u.a. für abgebrannte Kernbrennstoffkassetten genutzt, deren Wände durch etwa senkrecht zu den Wänden ausgerichtete Rippen zuverlässig beabstandet sind.

Transportbehälter dieser Art sind im wesentlichen doppelwandig. Ein rohrförmiger Grundkörper hat an seiner Außenseite abstehende Rippen.
Dieser Grundkörper wird zusammen mit seinen Rippen von einem Mantel umschlossen.
Dieser Mantel absorbiert zusätzlich Strahlung.
Er schützt die zwischen den Rippen angeordneten Harzkörper und die Rippen im Havariefall.
Der Mantel unterstützt die Ableitung der Wärme nach außen.

Durch die Anmelderin und andere Hersteller wird eine Ausführungsform der Verbindung des Mantels mit dem Grundkörper benutzt, bei der der Mantel aus zwei, paßgenau auf den Außendurchmesser der Rippen gebogenen Halbschalen besteht, die gegeneinander verspannt und mit dem Grundkörper verbunden sind.

Bei der üblichen Größe dieser Behälter und der notwendigen Wandstärke der Halbschalen des Mantels ist es nicht möglich, einen unmittelbaren stofflichen Kontakt zwischen den Köpfen aller Rippen und der Innenfläche der Halbschalen herzustellen.

In jedem Fall ist der Wärmeübergang von der Oberfläche der Rippen auf den Mantel erheblich gestört.

Andererseits führt die fehlende stoffliche Verbindung zwischen den Köpfen der Rippen und dem Mantel zu einem Festigkeitsverlust, der im Havariefall erhebliche und gefährliche Auswirkungen haben kann.

Zur Vermeidung dieser Nachteile hat man mit der DE-PS 40 32 343 vorgeschlagen, den äußeren Mantel aus einzelnen Segmenten zusammenzusetzen.
Diese Segmente oder Streifen überspannen jeweils den Raum zwischen zwei einander benachbarten Rippenköpfen. Die Segmente wurden miteinander und mit den Köpfen der Rippen als Mehrfachstoß verschweißt.

Zur zusätzlichen Sicherung der unzuverlässig abschirmenden Schweißnaht am Mehrfachstoß hat man Winkelprofile angefügt, die die Schweißnaht am Mehrfachstoß zusätzlich bedecken.

Die große Zahl der Schweißnähte mit erheblicher Länge und die große Zahl der miteinander zu verbindenden Teile führte zu hohen Kosten, die in keinem Verhältnis zu den erreichten Effekten standen.

Nachteilig wirkten sich auch die durch das Schweißen erzeugten Spannungen in den zu verbindenden Elementen aus.

Durch die hohen Anforderungen bezüglich der Wärmeableitung ist es angeraten, die Rippen am Grundkörper z.B. aus Kupfer herzustellen. Kupfer leitet die Wärme hervorragend.

Beim Einsatz z.B. dieses Materials für die Rippen entstehen für die Herstellung der Schweißnaht am Mehrfachstoß zusätzliche Schwierigkeiten, für die es praktisch keine Lösungsvarianten gibt.

Durch die DD 228 924 wurde eine Lösungsvariante dargestellt, die auf dem zusätzlichen äußeren Mantel für den Transport- und Lagerbehälter verzichtete. Diese Ausführung erfordert jedoch einen sehr dickwandigen Grundkörper. Die Rippen sind ungeschützt. Es ist kein geschützter Raum für das zusätzliche Abschirmen von Strahlungen durch Harzkörper vorhanden.

Diese Transport- und Lagerbehälter entsprechen den gültigen Sicherheitsvorschriften nicht.

Mit der DE-PS 33 06 940 wurde vorgeschlagen, an der Innenseite des Mantels ebenfalls Rippen anzuordnen, die in die Zwischenräume zwischen den Rippen am Grundkörper eingreifen.

Diese Ausführung erfordert es, daß die Außenwand des Transportbehälters durch Flächen gebildet wird, die bei Montage das gegenseitige Ineinanderfügen der Rippen ermöglicht.

Nachteilig ist außerdem, daß zwischen den Rippen des Grundkörpers und dem Mantel kein oder nur ein sehr begrenzter stofflicher Kontakt vorhanden ist.
Die Wärmeableitung nach außen und die Festigkeit derartiger Behälter ist ungenügend.

Die in der Regel notwendige quaderförmige Ausbildung des Transportbehälters hat erhebliche Nachteile hinsichtlich seiner Festigkeit im Havariefall.

Daraus ergibt sich die Aufgabe der Erfindung, eine Schweißverbindung vorzuschlagen, die es ermöglicht, insbesondere an Transportbehältern für radioaktive Kernbrennstoffe, die höchsten Sicherheitsanforderungen entsprechen müssen, eine rationell herstellbare Verbindung zu gewährleisten,
- die einen durchgehenden stofflichen Kontakt zwischen den Teilen der Verbindung sichert,
- die auch die Verbindung unterschiedlicher Werkstoffe an dem Mehrfachstoß ermöglicht,
- die eine sehr hohe Festigkeit der Mehrfachstoßverbindung gewährleistet und
- die von einer Seite der Mehrfachstoßverbindung geschweißt werden kann.

Erfindungsgemäß wird diese Aufgabe durch die in Anspruch 1 definierten Verfahrensschritte gelöst.

Bei diesem Verfahren wird der formschlüssig zwischen die miteinander verschweißbaren Streifen eingefügte Kopf der Rippe durch die Schrumpfkräfte der Schweißverbindung und durch die relativ hohe Temperatur u.U. im plastischen Bereich so stark geklemmt, daß eine stoffliche Verbindung zwischen den einander benachbarten Streifen untereinander und eine nahezu stoffliche Verbindung der Streifen mit dem Kopf der angrenzenden Rippe erreicht wird.
Zusätzliche Stützflächen auf der gegenüberliegenden Oberfläche des Behälters erübrigen sich.

Die Festigkeit der Verbindung zwischen den Streifen wird durch die Schweißnaht selbst gesichert. Eine Beeinträchtigung durch auftretende Spannungen ist nicht gegeben.

Bei diesem Verfahren sind die Spannungen innerhalb dieser Verbindung verteilt und ausgeglichen.

Die Eigenschaften der Schweißverbindung eignen sich unter anderem hervorragend für die Herstellung des Stahlmantels an Transport- und/oder Lagerbehältern für abgebrannte Kernbrennstoffkassetten.

Die einzelnen Streifen sind wegen ihres begrenzten Gewichtes relativ einfach handhabbar, lassen sich mit hoher Präzision mit ihren innenliegenden Schultern der Ausnehmung auf die Rippen aufsetzen und in ansich bekannter Weise von Hand oder mit Hilfe von Schweißautomaten allein von außen her mit einer einzigen Schweißnaht verbinden.

Die Harzblöcke können vor dem Schweißen eingebracht werden. Dadurch kann man evtl. Hohlräume optimal ausfüllen und einen ausgezeichneten Strahlenschutz gewährleisten.
Die Dicke des Mantels kann praktisch beliebig gewählt werden, weil ein präzises, abgestimmtes Biegen des Mantels auf großer Länge nicht mehr erforderlich ist.

Durch die nahezu stoffliche Verbindung zwischen den Rippen aus Kupfer und dem Mantel aus Stahl kann eine optimale Wärmeleitung an die äußere Oberfläche des Mantels gewährleistet werden.

Die genannte Verbindung erhöht auch wesentlich die Widerstandsfähigkeit des Transportbehälters gegen mechanische äußere Einflüsse jeder Art und wird auch höchsten Anforderungen an deren Sicherheit gerecht.

Die Schweißnaht selbst kann sowohl durch die den Schweißprozeß kontrollierende Person, als auch mit Hilfe an sich bekannter Prüfvorrichtungen kontrolliert und ggf. nachgearbeitet werden.

Die Fehlerquote bei der Herstellung dieser kostenintensiven Transportbehälter wird weiter deutlich reduziert.

*Der Transport- und Lagerbehälter nach Anspruch 2 ist einerseits kostengünstig herstellbar; zum ändern besitzt der doppelte Mantel neben einer nahezu ebenen Oberfläche eine sehr hohe Festigkeit. Dabei wird die im Innern des Behälters entstehende Wärme bedeutend besser nach außen abgeführt und verhindert einen Wärmestau im Innern des Behälters.*

*Die im ringförmigen Bereich zwischen Grundkörper und dem äußeren Mantel angeordneten Harzkörper, die im wesentlichen der Strahlungsabschirmung dienen, können die vorhandenen Hohlräume nahezu vollständig ausfüllen und so die Strahlung optimal abschirmen.*

*Die Gestaltung der Rippen aus Kupferprofilen nach Anspruch 3 unterstützt neben der optimalen stofflichen Verbindung zwischen den Rippen und dem Außenmantel zusätzlich die Ableitung der Wärme nach außen.*

Die Erfindung soll nachstehend an einem Ausführungsbeispiel näher erläutert werden. In den dazugehörigen Zeichnungen zeigen,
- Fig. 1:: einen Querschnitt durch eine erfindungsgemäße Mehrfachstoßverbindung,
- Fig. 2:: einen Querschnitt durch die Randzone eines Transportbehälters mit Rippen und Mantel sowie
- Fig. 3:: eine Gesamtansicht eines Transportbehälters.

Die Erfindung soll am Beispiel eines Transportbehälters für abgebrannte Kernbrennstoffkassetten oder für Kernbrennstoffstäbe beschrieben werden.

Der Mehrfachstoß von Teilen (61,61',4) wird hier durch je einen ersten Streifen 61 (erstes Teil) und einen zweiten Streifen 61' (zweites Teil), die einander unmittelbar benachbart sind, und dem Kopfabschnitt 41 einer Rippe 4 (drittes Teil) gebildet.

Die Rippe 4 besteht aus einem Kupferprofil mit einem regelmäßig geformten Kopfabschnitt 41.

Die Streifen 61,61' besitzen an den gegeneinander gerichteten Enden je eine stufen- oder Schulterförmige Ausnehmung 612,612', die das Kopfstück 41 der Rippe 4 gemeinsam formschlüssig umgreifen.
Liegen diese stufenförmigen Ausnehmungen 612,612' an den Seitenflächen der Rippe 4 an, bleibt zwischen den gegeneinander gerichteten Kanten, oberhalb der Schultern der Ausnehmungen eine Trennfuge 611 von etwa 1 mm.

Im Bereich oberhalb dieser Trennfuge 611 sind diese Streifen 61,61' durch entsprechende Fasen für den nachfolgenden Schweißvorgang vorbereitet.

Die Schweißnaht 62 wird, beginnend bei der Trennfuge 611 lagenweise nach oben hin aufgebaut und so die Verbindung zwischen den zwei benachbarten Streifen 61,61' hergestellt. Das Kopfstück 41 der Rippe 4 wird dabei nicht angeschmolzen.

Die beim Schweißvorgang auftretenden Schrumpfkräfte ziehen die miteinander verbundenen Streifen 61,61' so stark zusammen, daß das Kopfstück 41 der Rippe 4 nahezu stofflich mit den formschlüssig angelegten Stufen (612,612') der Streifen 61,62 verbunden wird.

Die relativ großen Schrumpfkräfte und der hohe Wärmeeintrag beim Schweißen sorgen dafür, daß sich die Oberfläche der weicheren Kupferrippe unter dem Druck plastisch verformt und alle Oberflächen in ihrer kompletten Struktur ineinander gefügt werden.

Mit einer derartigen Verbindung wird vermieden, daß ungleiche Werkstoffe miteinander verschweißt werden müssen.

Die Wahl des Werkstoffes des Dritten Teiles (4) bleibt in Grenzen wählbar. Entscheidend für die Wahl des Werkstoffes ist, daß er unter den Bedingungen des Schweißvorganges seine Form behält und den Schrumpfkräften einen ausreichend großen Widerstand entgegensetzen kann.
Die erreichte Verbindung besitzt eine sehr hohe Festigkeit und schließt den Bruch infolge von Rißinitiatoren mit Kerbwirkung vollständig aus.

Die durch die Kernbrennstoffkassetten 2 freigegebene Wärme kann über die Verbindungsstelle von der Kupferrippe 4 sehr gut in den Mantel 6 abfließen und an die Umgebung abgeführt werden.
Die Temperatur im Transport- und/oder Lagerbehälter 1 wird in zulässigen Grenzen gehalten.

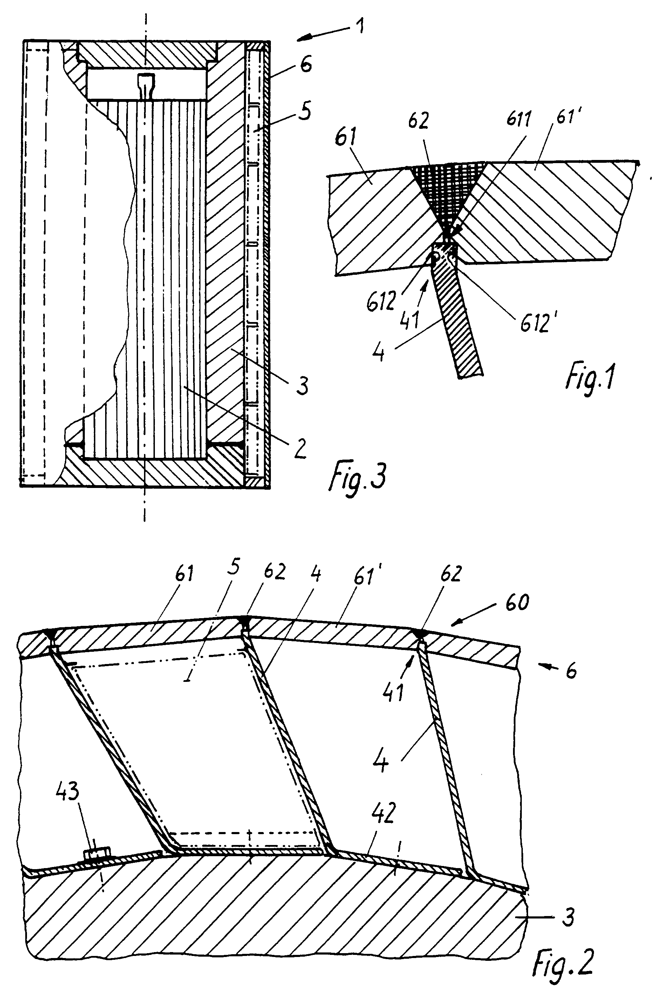

Der Transport- und/oder Lagerbehälter 1, der in Fig. 2 ausschnittsweise und in Fig. 3 in seiner Gesamtheit dargestellt ist, wird durch die Anwendung dieses erfinderischen Verfahrens mit erheblich verbesserten Eigenschaften herstellbar.

Die Rippen 4 sind mittels Schraubverbindung 43 am Umfang des zylindrischen Grundkörpers 3 befestigt. Die dafür erforderlichen Gewindebohrungen besitzen nur eine geringe Tiefe und halten die Rippen 4 ausreichend fest an der Oberfläche des Grundkörpers 3.

Zwischen die Rippen, die entlang von Mantellinien des Grundkörpers 3 geführt werden, werden Harzblöcke 5 eingefügt, die einen wesentlichen Teil der Neutronenstrahlung abschirmen. Diese Harzblöcke 5 werden mit geringem Spiel von außen eingesetzt und im Abstand von der Oberkante der Rippen 4 fixiert.

Den oberen Abschluß der Hohlräume bilden die Streifen 61, 61', aus denen der Mantel 6 zusammengesetzt wird.

Die Form der Streifen wurde bereits anhand der Fig. 1 beschrieben. Vor dem Beginn des Schweißvorganges werden die Streifen 61, 61' durch das Anheften von entfernbaren Halteelementen fixiert, so daß eine hohe Präzision der Schweißnaht 62 möglich wird.

Mit den entfernbaren Halteelementen kann man den an einem Ende noch freien Streifen 61 mit der die Trennfuge der nächsten Schweißnaht begrenzenden Kante unter Vorspannung gegen den Kopf 41 der dort befindlichen Rippe 4 richten.
Durch die Winkelschrumpfung der Schweißnaht 62 wird das noch freie Ende des Streifens 61 angehoben und der Kopf 41 der Rippe 4 rastet unter der Vorspannung auf die Schulter der Ausnehmung 612.

Auf diese Weise wird Lagefixierung der Teile für die Vorbereitung des Schweißens erheblich vereinfacht und das Entstehen von Spannungen weitgehend reduziert.

Die Form der Rippen 4 ist nicht an das in Fig. 2 dargestellte Profil gebunden. Wichtig ist, daß im Bereich der Mehrfachstoßverbindung 60 die Oberflächen der Stufen so gewählt sind, daß die hohen Schrumpfkräfte in das Innere des Querschnittes der Streifen 61, 61' abgeleitet werden.

Die Rippe 4 kann auch durch zwei spiegelbildlich gegeneinander gerichtete Kupferprofile gebildet werden, deren obere, äußere Enden gemeinsam zwischen die Stufen zweier benachbarter Streifen 61, 61' in eine gemeinsame Mehrfachstoßverbindung 60 eingefügt sind.

Die Form der Rippen 4 richtet sich vor allem danach welche Forderungen man an den Behälter ansich stellt.
Soll er einen starken mechanischen Stoß dämpfen, sind einseitig geneigte Rippen sinnvoll.

Legt man Wert auf eine hohe Steifigkeit des Mantels dann sollte man gegeneinander gerichtete Rippen 4 einsetzen.

Der Mantel ansich ist nach dem Anfügen aller Streifen selbsttragend und verleiht dem Transportbehälter eine hohe Festigkeit.

### Aufstellung der verwendeten Bezugszeichen

- 1: Transport- und Lagerbehälter
- 2: Kernbrennstoffkassetten
- 3: Grundkörper

- 4: Rippen (Profil)
- 41: Kopf
- 42: Fuß
- 43: Verschraubung

- 5: Harzblock

- 6: Mantel
- 60: Mehrfachstoßverbindung
- 61, 61': Streifen
- 611: Trennfuge
- 612,162': Ausnehmung
- 62: Schweißnaht

## Patentansprüche

1. Verfahren zur Herstellung eines doppelwandigen Transportund/oder Lagerbehälters (1), insbesondere für abgebrannte Kernbrennstoffkassetten, wobei auf dem Umfang eines hohlen zylindrischen Grundkörpers (3) Rippen (4) befestigt werden, die Zwischenräume zwischen benachbarten Rippen (4) im Kopfbereich (41) der Rippen mit Hilfe von miteinander verschweißten Elementen (61, 61') überbrückt werden und die Elemente (61, 61') jeweils miteinander und mit dem Kopf einer dort befindlichen Rippe (4) verbunden werden,
**dadurch gekennzeichnet, daß**
- die einander benachbarten Elemente (61, 61') Streifen sind, die in einem Abstand voneinander derart positioniert werden, daß über dem Kopf (41) der angrenzenden Rippe (4) eine Trennfuge gebildet wird, die größer ist als die absolute Größe der Schrumpfung der Schweißnaht, die die Streifen (61, 61') in Überbrückung der Trennfuge (611) verbindet,
- diese beiden Streifen (61, 61') im Bereich der Trennfuge (611) gemeinsam eine Ausnehmung (612, 612') begrenzen, die an beiden Streifen (61, 61') in Schrumpfrichtung einander gegenüberliegende Flächen aufweist,
- der Kopf (41) der Rippe (4) formschlüssig in der Ausnehmung (612, 612') positioniert wird,
- nach Abschluß dieses Fügeprozesses die die Trennfuge (611) bildenden Streifen (61, 61') mittels Schweißnaht (62) verbunden werden und
- der geschilderte Vorgang nacheinander am Kopf (41) jeder Rippe (4) wiederholt wird.

2. Doppelwandiger Transport- und/oder Lagerbehälter, insbesondere für abgebrannte Kernbrennstoffkassetten, bestehend
- aus einem hohlen zylindrischen Grundkörper (3), der mittels Rippen mit der äußeren Wand verbunden ist, die aus zusammengeschweißten Streifen (61, 61') besteht, die auch die Rippen (4) verbinden,
- aus Streifen (61,61'), die die Abstände zwischen den Rippen (4) im Kopfbereich der Rippen überbrücken und mit diesen jeweils paarweise verbunden sind,
**dadurch gekennzeichnet,**
**daß** jeweils zwei einander benachbarte Streifen (61, 61') über dem Kopf (41) einer Rippe (4) mittels Schweißnaht (62) miteinander verbunden sind und
**daß** der Kopf (41) der Rippe (4) zwischen den beiden Streifen (61, 61') unter Wirkung der Schrumpfkräfte der Schweißnaht (62) formschlüssig und kraftschlüssig gehalten ist.

3. Transport- oder Lagerbehälter nach Anspruch 2, **dadurch gekennzeichnet,**
**daß** die auf dem Grundkörper (3) aufgesetzten Rippen (4) aus winkelförmigen, vorzugsweise Kupferprofilen bestehen und
**daß** die Rippen (4) am Umfang des Grundkörpers (3) mittels Schraubverbindungen (43) befestigt sind.

## Claims

1. Method for the production of a double walled transport and/or storage container (1), more especially for burned nuclear fuel cassettes whereas the ribs (4) are fastened to the circumference of a hollow cylindrical basic body (3) and the intermediate spaces between the adjacent ribs (4) are bridged in the head area (41) of the ribs by means of elements (61, 61¹) welded to each other and the elements (61, 61¹) are joined with each other respectively and to the head of a rib (4) found there,
**characterized in that**
- the elements (61, 61¹) adjacent to each other are strips which are positioned to each other at a distance so that a separating gap is formed above the head (41) of the adjacent rib (4) which is larger than the absolute dimension of the weld seam shrinkage, and which connects the strips (61, 61¹) when bridging the separating gap (611),
- these two strips (61, 61¹) limit the recess (612, 612) in the region of the separating gap (611) which has opposing surfaces to each other on the two strips (61, 61¹) in shrink direction
- the head (41) of the rib (4) is locked in position in the recess (612, 612¹),
- after completion of this jointing process in which the separate strips (61, 61¹) that form the separating gap (611) are joined together by means of a welded seam (62) and
- the described process is repeated in succession on the head (41) of each rib (4).

2. Double wall transport and/or storage containers, more especially for burned nuclear fuel cassettes, comprising
- a hollow cylindrical basic body (3), which is connected to the outer wall by means of ribs which comprise strips (61, 61¹) welded together that also connect up the ribs (4),
- strips (61, 61¹), which bridge over the distances between the ribs (4) in the head area of the ribs and which are connected each time with these in pairs
**characterized in that**
the two strips (61, 61¹) adjacent to each other are connected each time above the head (41) of one rib (4) by means of a welded seam (62) and
that the head (41) of the rib (4) is locked and held by force between the two strips (61, 61¹) under the effect of the shrink forces of the welded seams (62).

3. Transport or storage containers in accordance with claim 2, **characterized in that**
the ribs (4) attached to the basic body (3) comprise angle shaped, preferably copper profiles and
that the ribs (4) around the circumference of the basic body (3) are fastened by means of screw connections (43).

## Revendications

1. Procédé de fabrication d'un réservoir (1) de stockage et/ou de transport à double parois, notamment pour des cassettes de combustible nucléaire épuisé, dans lequel des nervures (4) sont fixées sur la périphérie d'un corps (3) de base cylindrique creux, les intervalles entre des nervures (4) voisines, dans la région (41) de tête des nervures, sont recouverts à l'aide d'éléments (61, 61') soudés mutuellement et les éléments (61, 61') sont reliés mutuellement et avec la tête d'une nervure (4) qui s'y trouve,
**caractérisé en ce que**
- les éléments (61, 61') mutuellement voisins sont des bandes, qui sont positionnées mutuellement à distance de manière à former un joint de séparation au-dessus de la tête (41) de la nervure (4) adjacente, joint qui est plus grand que la valeur absolue du retrait du cordon de soudure, qui relie les bandes (61, 61') à recouvrement du joint (611) de séparation,
- ces deux bandes (61, 61') délimitant, dans la zone du joint (611) de séparation, en commun un évidement (612, 612'), qui comporte sur les deux bandes (61, 61') des faces mutuellement en regard dans la direction du retrait,
- la tête (41) de la nervure (4) étant positionnée dans l'évidement (612, 612') par complémentarité de forme,
- après achèvement de ce processus de jonction, les bandes (61, 61') formant le joint (611) de séparation sont reliées au moyen du cordon (62) de soudure, et
- l'opération décrite précédemment étant répétée à la tête (41) de chaque nervure (4).

2. Réservoir de stockage et/ou de transport à double parois, notamment pour des cassettes de combustible nucléaire épuisé, constitué
- d'un corps (3) de base cylindrique creux, qui est relié à la paroi extérieure par des nervures, paroi qui est constituée de bandes (61, 61') soudées ensemble, qui relie également les nervures (4),
- de bandes (61, 61') qui recouvrent les intervalles entre les nervures (4) dans la région de tête des nervures et qui sont reliées par paire avec celles-ci,
**caractérisé en ce que**
respectivement deux bandes (61, 61') mutuellement voisines sont reliées au-dessus de la tête (41) d'une nervure (4) au moyen du cordon (62) de soudure, et
**en ce que** la tête (41) de la nervure (4) est maintenue entre les deux bandes (61, 61') sous l'action de la force du retrait du cordon (62) de soudure par complémentarité de forme et complémentarité de force.

3. Réservoir de stockage et/ou de transport suivant la revendication 2, **caractérisé en ce que,**
les nervures (4) disposées sur le corps (3) de base sont constituées de profilés de forme angulaire, de préférence en cuivre et
les nervures (4) sont fixées à la périphérie du corps (3) de base au moyen de liaisons (43) par vis.
